# EUROPEAN PATENT APPLICATION

(11) **EP 4 460 071 A1**
(43) Date of publication of application: **06.11.2024**
(21) Application number: 22914931.5
(22) Date of filing: 28.12.2022
(51) Int. Cl.: H04W 24/02, G06N 3/082

(54) **INFORMATION ACQUIRING METHOD AND APPARATUS, AND COMMUNICATION DEVICE**

(30) Priority: 31.12.2021 CN 202111666058
(71) Applicant: VIVO MOBILE COMMUNICATION CO., LTD., Dongguan, Guangdong 523863 (CN)
(72) Inventor: SUN, Bule, Dongguan, Guangdong 523863 (CN); SUN, Peng, Dongguan, Guangdong 523863 (CN); YANG, Ang, Dongguan, Guangdong 523863 (CN)
(74) Representative: Lavoix
(86) International application number: PCT/CN2022/142888
(87) International publication number: WO 2023/125679

(57) **Abstract**

This application pertains to the field of communication technologies, and discloses an information obtaining method and apparatus, and a communication device. The method includes: obtaining, by a first communication device, description information of a set of target reference points, where a reference point in the set of target reference points is a process node in a communication process, and the set of target reference points includes a reference point corresponding to an input of a first model and/or a reference point corresponding to an output of a second model.

## Description

### CROSS-REFERENCE TO RELATED APPLICATIONS

This application claims priority to Chinese Patent Application No. 202111666058.6, filed in China on December 31, 2021, which is incorporated herein by reference in its entirety.

### TECHNICAL FIELD

This application pertains to the field of communication technologies, and specifically relates to an information obtaining method and apparatus, and a communication device.

### BACKGROUND

At present, artificial intelligence (Artificial Intelligence, AI) has been widely used in various fields. When AI is applied to a wireless communication system, an AI model needs to be run on a terminal. However, as the terminal moves, a wireless environment changes, a service to be performed changes, and so on, the AI model used on the terminal further needs a change and evolution. Because of a limited computing capability and storage of the terminal, when the AI model on the terminal needs an update, the terminal needs to obtain a new model from a network side device.

In the wireless communication system, when a model is requested and delivered, the AI model needs different inputs and outputs for different tasks, and therefore a lot of information needs to be used to describe physical quantities corresponding to the inputs and outputs of the model, causing high communication overheads during model interaction.

### SUMMARY

Embodiments of this application provide an information obtaining method and apparatus, and a communication device, to resolve a problem that communication overheads of an existing communication device are high during model interaction.

According to a first aspect, an information obtaining method is provided, and includes:
obtaining, by a first communication device, description information of a set of target reference points, where a reference point in the set of target reference points is a process node in a communication process, and the set of target reference points includes a reference point corresponding to an input of a first model and/or a reference point corresponding to an output of a second model.

According to a second aspect, an information obtaining method is provided, and includes:
receiving, by a second communication device from a first communication device, description information of a set of target reference points, where a reference point in the set of target reference points is a process node in a communication process, and the set of target reference points includes a reference point corresponding to an input of a first model and/or a reference point corresponding to an output of a second model.

According to a third aspect, an information obtaining apparatus is provided, and includes:
an obtaining module, configured to obtain description information of a set of target reference points, where a reference point in the set of target reference points is a process node in a communication process, and the set of target reference points includes a reference point corresponding to an input of a first model and/or a reference point corresponding to an output of a second model.

According to a fourth aspect, an information obtaining apparatus is provided, and includes:
a receiving module, configured to receive description information of a set of target reference points from a first communication device, where a reference point in the set of target reference points is a process node in a communication process, and the set of target reference points includes a reference point corresponding to an input of a first model and/or a reference point corresponding to an output of a second model.

According to a fifth aspect, a communication device is provided, and includes a processor, a memory, and a program or an instruction that is stored in the memory and capable of being run on the processor. The program or the instruction is executed by the processor to implement steps of the information obtaining method according to the first aspect or the second aspect.

According to a sixth aspect, a readable storage medium is provided. The readable storage medium stores a program or an instruction, and the program or the instruction is executed by a processor to implement steps of the information obtaining method according to the first aspect or the second aspect.

According to a seventh aspect, a chip is provided. The chip includes a processor and a communication interface. The communication interface is coupled to the processor, and the processor is configured to run a program or an instruction of a network side device to implement steps of the information obtaining method according to the first aspect or the second aspect.

In embodiments of this application, the first communication device obtains the description information of the set of target reference points, where the reference point in the set of target reference points is the process node in the communication process, and the set of target reference points includes the reference point corresponding to the input of the first model and/or the reference point corresponding to the output of the second model. In the foregoing descriptions, the input of the first model and/or the output of the second model each correspond to a reference point, so that the input of the first model and/or the output of the second model can separately be determined based on description information of reference points. In this way, the communication device can determine an input and output of a model based on description information of a reference point during model interaction, to reduce model interaction overheads.

### BRIEF DESCRIPTION OF DRAWINGS

FIG. 1 is a diagram of a structure of a network system according to an embodiment of this application;
FIG. 2 is a flowchart of an information obtaining method according to an embodiment of this application;
FIG. 3 is another flowchart of an information obtaining method according to an embodiment of this application;
FIG. 4a is a schematic diagram of a result of adding a reference point according to an embodiment of this application;
FIG. 4b is a flowchart of an information obtaining method according to an embodiment of this application;
FIG. 4c is another flowchart of an information obtaining method according to an embodiment of this application;
FIG. 5 is a diagram of a structure of an information obtaining apparatus according to an embodiment of this application;
FIG. 6 is another diagram of a structure of an information obtaining apparatus according to an embodiment of this application;
FIG. 7 is a diagram of a structure of a communication device according to an embodiment of this application;
FIG. 8 is a diagram of a structure of a terminal according to an embodiment of this application; and
FIG. 9 is a diagram of a structure of a network side device according to an embodiment of this application.

### DESCRIPTION OF EMBODIMENTS

The following clearly describes technical solutions in embodiments of this application with reference to the accompanying drawings in embodiments of this application. Apparently, the described embodiments are some but not all of embodiments of this application. All other embodiments obtained by a person of ordinary skill in the art based on embodiments of this application shall fall within the protection scope of this application.

The terms "first", "second", and the like in the description and claims of this application are used to distinguish between similar objects instead of describing a specific order or sequence. It should be understood that, data used in such a way is interchangeable in proper circumstances, so that embodiments of this application can be implemented in an order other than the order illustrated or described herein. Objects classified by "first" and "second" are usually of a same type, and a quantity of objects is not limited. For example, there may be one or more first objects. In addition, in the description and the claims, "and/or" represents at least one of connected objects, and a character "/" generally represents an "or" relationship between associated objects. In this application, "transmission" means signal transmission, and is not signal sending in a narrow sense.

It should be noted that, the technologies described in embodiments of this application are not limited to a long term evolution (Long Term Evolution, LTE)/LTE-advanced (LTE-Advanced, LTE-A) system, and may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in embodiments of this application may be used interchangeably. The described technologies may be applied to both the systems and the radio technologies mentioned above as well as to other systems and radio technologies. However, the following describes a new radio (New Radio, NR) system for illustrative purposes, and NR terms are used in most of the following description. These technologies may also be applied to an application other than an NR system application, such as a 6th generation (6^{th} Generation, 6G) communication system.

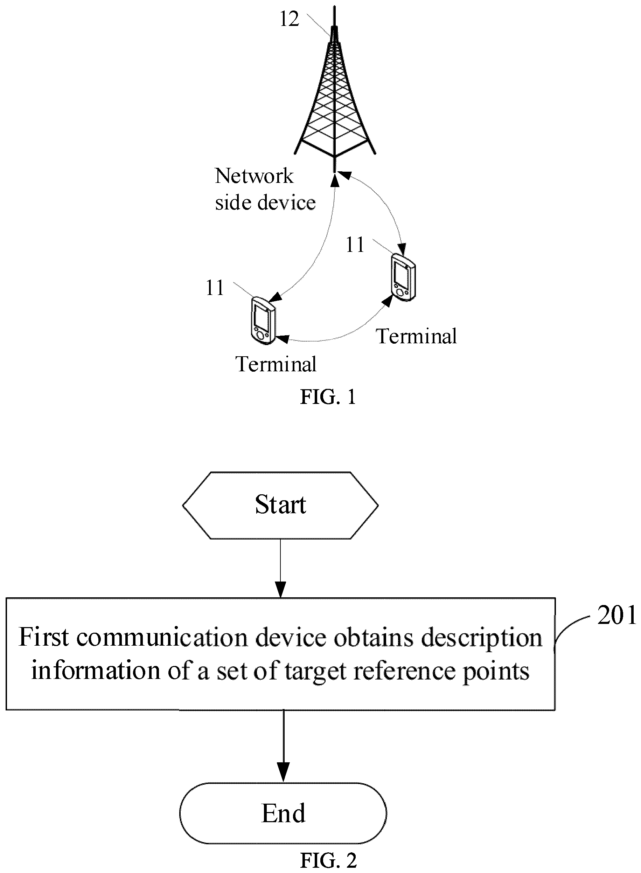

FIG. 1 is a diagram of a structure of a wireless communication system to which embodiments of this application may be applied. The wireless communication system includes a terminal 11 and a network side device 12. The terminal 11 may also be referred to as a terminal device or user equipment (User Equipment, UE). The terminal 11 may be a terminal side device, for example, a mobile phone, a tablet personal computer (Tablet Personal Computer, TPC), a laptop computer (Laptop Computer, LC) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device, WD), vehicle user equipment (Vehicle User Equipment, VUE), or pedestrian user equipment (Pedestrian User Equipment, PUE). The wearable device includes a bracelet, a headset, glasses, and the like. It should be noted that a specific type of the terminal 11 is not limited in embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), an evolved NodeB (eNB), a home NodeB, a home evolved NodeB, a wireless local area network (Wireless Local Area Network, WLAN) access point, a wireless fidelity (Wireless Fidelity, Wi-Fi) node, a transmission and reception point (Transmission and Reception Point, TRP), or another suitable term in the field. The base station is not limited to a specific technical term, provided that same technical effect is achieved. It should be noted that in embodiments of this application, only a base station in an NR system is used as an example, but a specific type of the base station is not limited.

With reference to the accompanying drawings, the following describes in detail an information obtaining method provided in embodiments of this application by using specific embodiments and application scenarios thereof.

FIG. 2 is a flowchart of an information obtaining method according to an embodiment of this application. The information obtaining method includes the following steps.

Step 201: obtaining, by a first communication device, description information of a set of target reference points, where a reference point in the set of target reference points is a process node in a communication process, and the set of target reference points includes a reference point corresponding to an input of a first model and a reference point corresponding to an output of a second model.

Specifically, the first communication device may be any device in a communication system. The description information of the set of target reference points may be sent by another communication device other than the first communication device in the communication system, or determined through pre-configuration, for example, determined according to protocol specifications. Alternatively, the set of target reference points may be obtained by the first communication device performing reference point configuration on an existing set of first reference points.

If the set of target reference points is sent by the another communication device, both the another communication device and the first communication device are configured with the set of first reference points, and the another communication device performs reference point configuration on the set of first reference points, the set of target reference points may be a set obtained through reference point configuration on the set of first reference points, or the set of target reference points includes a reference point, in the set of first reference points, that has been through a change because of reference point configuration, that is, the set of target reference points is a subset of the set obtained through reference point configuration on the set of first reference points.

If the set of target reference points is obtained by the first communication device performing reference point configuration on the set of first reference points, the set of target reference points may be a set obtained through reference point configuration on the set of first reference points, or the set of target reference points is a subset of a set obtained through reference point configuration on the set of first reference points.

The first model and the second model may be a same model or different models. This is not limited herein. The set of target reference points may include the reference point corresponding to the input of the first model, may include the reference point corresponding to the output of the second model, or may include both the reference point corresponding to the input of the first model and the reference point corresponding to the output of the second model.

The set of target reference points includes one or more reference points. The reference point is a process node in a communication process. The communication process may include an information processing process, an event process, and a signaling process. The first model and the second model may both be AI models.

In this embodiment, the first communication device obtains the description information of the set of target reference points, where the reference point in the set of target reference points is the process node in the communication process, and the set of target reference points includes the reference point corresponding to the input of the first model and/or the reference point corresponding to the output of the second model. In the foregoing descriptions, the input of the first model and/or the output of the second model each correspond to a reference point, so that the input of the first model and/or the output of the second model can separately be determined based on description information of reference points. In this way, the communication device can determine an input and output of a model based on description information of a reference point during model interaction, to reduce model interaction overheads.

Each reference point in the set of target reference points corresponds to one piece of description information, and the description information of the reference point includes at least one of the following:
(1) An identity symbol of the reference point, for example, an identifier (identifier, ID) of the reference point.
(2) Process location information of the reference point in the communication process, for example, a process location of the reference point in the communication process or a node location in a data processing process.
(3) A physical meaning corresponding to the process location information of the reference point in the communication process, for example, information before Fourier transform, information after Fourier transform, information before precoding, information after precoding, information before modulation, or information after modulation.
(4) A data format corresponding to the process location information of the reference point in the communication process, where the data format corresponding to the process location information may be classified by data types, data dimensions, file formats, or the like. For example, if the data format is classified by data types, the data format includes, but is not limited to, floating point data, fixed point data, and the like; if the data format is classified by data dimensions, the data format includes, but is not limited to, a row vector not limited to M rows, a matrix with M rows and N columns, a tensor with M rows, N columns, and P channels, and the like, where M, N, and P are all positive integers; or if the data format is classified by file formats, the data format includes, but is not limited to, a text format (that is, a txt format), a MATLAB file format (that is, a mat format), an excel table file format (that is, an xls format or xlsx format), a data format, an extensible markup language (Extensible Markup Language, XML) format, a JSON format, a comma-separated values (Comma-Separated Values, CSV) format, a hyper text markup language (Hyper Text Markup Language, HTML) format, a latex format, an sql format, and the like.
(5) A topological relationship between associated reference points, for example, a sequence relationship, an exclusion relationship, a parallel relationship, or a belongingness relationship between two reference points in a process.

In an embodiment of this application, the set of target reference points is obtained by the first communication device performing reference point configuration on a pre-obtained set of first reference points, and reference point configuration includes at least one of the following:
(1) Adding a first reference point to the set of first reference points: Specifically, the first communication device adds a first reference point to the set of first reference points based on a first triggering condition. The first triggering condition includes at least one of the following:
   A new process is added, where the new process corresponds to a new reference point, and the set of first reference points does not include the new reference point, for example, the new process corresponds to the first reference point; and
   a new model is added, where the new model corresponds to a new reference point, and the set of first reference points does not include the new reference point, for example, the new model corresponds to the first reference point.

To be specific, in a case in which a new reference point is needed in a new process, a first reference point needs to be added to the set of first reference points, and the new process corresponds to the first reference point; and/or in a case in which a new reference point is needed in a new model, a first reference point needs to be added to the set of first reference points, and the new model corresponds to the first reference point.

The adding a first reference point to the set of first reference points includes:
configuring an association relationship between the first reference point and a reference point in the set of first reference points, and modifying the association relationship between original reference points (that is, reference points, in the set of first reference points, that are not the first reference point) in the set of first reference points.

The communication system may include a plurality of devices, for example, a terminal and a network side device, and one device is determined from the plurality of devices as a reference point maintenance device, a remaining device is a reference point application device. The first communication device may be a reference point maintenance device, or may be a reference point application device. Preferably, only one reference point maintenance device is set in the communication system. The step of adding a first reference point may be performed by the reference point maintenance device, or may be performed by the reference point application device, and is preferably performed by the reference point maintenance device.

(2) Deleting a second reference point from the set of first reference points: Specifically, the first communication device deletes a second reference point from the set of first reference points based on a second triggering condition.

The second triggering condition includes at least one of the following:

The second reference point does not correspond to an input or output of any model within a preset time period; and
a function of the second reference point is replaced with a new reference point, where for example, a new reference point is added to the set of first reference points, and the function of the second reference point is replaced with the new reference point.

In the foregoing descriptions, the preset time period may be set based on an actual case. This is not limited here.

The deleting a second reference point from the set of first reference points includes:
modifying an association relationship between reference points, in the set of first reference points, that are not the second reference point.

The step of deleting a second reference point may be performed by the reference point maintenance device, or may be performed by the reference point application device, and is preferably performed by the reference point maintenance device.

(3) Modifying an association relationship between reference points in the set of first reference points: Specifically, the first communication device modifies the association relationship between the reference points in the set of first reference points based on a third triggering condition.

The third triggering condition includes at least one of the following:

A new process is added, where the new process corresponds to the first reference point, or the new process corresponds to a reference point in the set of first reference points;
a new model is added, where the new model corresponds to the first reference point, or the new model corresponds to a reference point in the set of first reference points;
the second reference point does not correspond to an input or output of any model within a preset time period; and
a function of the second reference point is replaced with a new reference point.

The modifying an association relationship between reference points in the set of first reference points includes at least one of the following:
(1) For a case of adding a first reference point: configuring an association relationship between the first reference point and a reference point in the set of first reference points, and modifying an association relationship between the reference points in the set of first reference points; and
(2) for a case of deleting a second reference point: modifying an association relationship between reference points, in the set of first reference points, that are not the second reference point.

The association relationship between the reference points in the set of first reference points may be modified by the reference point maintenance device, or may be modified by the reference point application device, and is preferably modified by the reference point maintenance device.

In an embodiment of this application, the first communication device may perform reference point configuration through triggering based on trigger information, and the trigger information includes at least one of the following:
trigger information sent by a second communication device;
trigger information obtained by the first communication device through sensing; and
trigger information carried in a control instruction.

Specifically, the second communication device may be a reference point maintenance device (in this case, the first communication device is a reference point application device), or may be a reference point application device.

The trigger information may be sent by the reference point application device to the reference point maintenance device, or may be obtained by the reference point maintenance device through sensing. The trigger information may alternatively be carried in a control instruction sent from a higher-level control device.

In the foregoing descriptions, the trigger information includes at least one of the following:
first information, where the first information indicates to add a new process, the new process corresponds to a new reference point, and the set of first reference points does not include the new reference point, for example, the new process corresponds to the first reference point, or the new process corresponds to an existing reference point, for example, the new process corresponds to a reference point in the set of first reference points;
second information, where the second information indicates to add a new model, the new model corresponds to a new reference point, and the set of first reference points does not include the new reference point, for example, the new model corresponds to the first reference point, or the new model corresponds to an existing reference point, for example, the new model corresponds to a reference point in the set of first reference points;
third information, where the third information indicates that the second reference point does not correspond to an input or output of any model within a preset time period; and
fourth information, where the fourth information indicates that a function of the second reference point is replaced with a new reference point.

In an embodiment of this application, the method further includes:
sending the description information of the set of target reference points to the second communication device, where the set of target reference points includes a set obtained through reference point configuration on the set of first reference points, or a subset of reference points of a set obtained through reference point configuration on the set of first reference points, and the subset of reference points includes a reference point, in the set of first reference points, that has been through a change based on reference point configuration, where for example, if the set of first reference points includes a reference point A, a reference point B, and a reference point C, a reference point D is added based on reference point configuration, and there is an association relationship between the reference point D and the reference point A, the subset of reference points may include only the reference point A and the reference point D.

That the first communication device sends the description information of the set of target reference points to the second communication device may be understood as a reference point alignment operation between the first communication device and the second communication device. A new set of reference points may be sent by the reference point maintenance device to the reference point application device incrementally (sending only a changed part of the updated set of first reference points) or fully (sending the entire updated set of first reference points). Further, the reference point application device feeds back an update result to the reference point maintenance device.

A manner of sending the set of target reference points includes at least one of periodical sending, sending triggered based on an event, and sending triggered based on an instruction.

The sending triggered based on an event may include the following two cases.

In a first case, the first communication device performs reference point configuration on the set of first reference points. For example, the first communication device is the reference point maintenance device, and the reference point maintenance device performs reference point configuration to obtain the updated set of first reference points, including adding a new reference point, deleting a reference point, updating an association relationship between reference points, or the like, and determines the set of target reference points based on the updated set of first reference points. For example, the updated set of first reference points is used as the set of target reference points, or a reference point that has been through a change in the updated set of first reference points is used as the set of target reference points, and the reference point maintenance device sends the set of target reference points to the reference point application device.

In a second case, when communication devices in the communication system are in model interaction, and reference point mismatching occurs, an alignment request is initiated. The alignment request is used for reference point alignment between the communication devices. The reference point mismatching means a set of reference points of a model sending end is different from a set of reference points of a model receiving end. Preferably, the model sending end and the model receiving end may be two reference point application devices. The triggering with an event during model interaction includes the following two cases.
(1) The set of reference points of the model sending end lacks a reference point in request information sent by the model receiving end for requesting for a model, and in this case, the model sending end needs to initiate an alignment request.
(2) The set of reference points of the model receiving end lacks a reference point in the model sent by the model sending end, and in this case, the model receiving end needs to initiate an alignment request.

Reference point alignment: Reference points needs to be aligned for all or some communication devices in a communication system when a new reference point is added, a reference point is deleted, or an association between reference points is modified (reference points may not be aligned for some communication devices as the communication devices do not need to use an updated reference point). In addition, there may be another periodic trigger, an event-based trigger (for example, when reference point mismatching occurs in model interaction, an alignment request is initiated), or an instruction-based trigger, and the following two manners are included.
(1) That the first communication device sends the description information of the set of target reference points to the second communication device may be understood as a reference point alignment operation between the first communication device and the second communication device. A new set of reference points may be sent by the reference point maintenance device to the reference point application device incrementally (sending only a changed part of the updated set of first reference points) or fully (sending the entire updated set of first reference points). Further, the reference point application device feeds back an update result to the reference point maintenance device.
(2) When two reference point application devices are in model interaction, a set of reference points of a first reference point application device is sent by the first reference point application device to a second reference point application device incrementally (sending only a changed part) or fully (sending an entire updated set of reference points). Further, the first reference point application device or the second reference point application device feeds back an update result to the reference point maintenance device.

The first communication device may be a model sending end, or may be a model receiving end.

In an embodiment of this application, the method further includes:
sending, by the first communication device to the second communication device, a first request, where the first request includes reference point information identifying a third reference point corresponding to an input of a model and reference point information identifying a fourth reference point corresponding to an output of the model; and
receiving, by the first communication device from the second communication device, first feedback information.

In this embodiment, the first communication device obtains a model according to the first request. The first communication device is an end that requests for the model, or may be understood as an end that requires the model. The second communication device is an end that sends the model. The first request includes reference point information identifying a third reference point corresponding to an input of a model and reference point information identifying a fourth reference point corresponding to an output of the model.

In embodiments of this application, reference point information may be one or more items in description information of a reference point, provided that the reference point information can identify the reference point. For example, the reference point information may be an identity symbol of the reference point.

The second communication device searches, based on the reference point in the first request, for a model that matches the reference point, and feeds back the first feedback information to the first communication device. The first communication device receives the first feedback information.

The first feedback information includes at least one of the following:
first acknowledgment information indicating successful matching;
model information of a first target model, where an input of the first target model corresponds to the third reference point, and an output of the first target model corresponds to the fourth reference point;
a first reference point alignment request;
second acknowledgment information indicating failed matching;
reference point information identifying a reference point, in the third reference point, with mismatching, and reference point information identifying a reference point, in the fourth reference point, with mismatching; and
reference point information of a recommended reference point.

Specifically, after the search (or matching) performed by the second communication device, if the model that matches the reference point in the first request is found, for example, if the first target model is found, the input of the first target model corresponds to the third reference point, and the output of the first target model corresponds to the fourth reference point, it indicates that a matched model is found. In this case, the first feedback information may include at least one of the following: the first acknowledgment information (for example, that the first acknowledgment information is 1 indicates that the matched model is found), and the first target model that is found.

If the second communication device has not found a matched model, and a cause for mismatching is that reference points of the second communication device and the first communication device are misaligned, the first feedback information may include at least one of the following: the second acknowledgment information (for example, that the acknowledgment information is 0 initiates that no matched model is found), and a request message for initiating reference point alignment.

If the second communication device has not found a matched model, but reference points of the second communication device and the first communication device are aligned, as a search failure has another cause, for example, the second communication device does not have a corresponding model, the first feedback information may include at least one of the following: the second acknowledgment information (for example, that the acknowledgment information is 0 initiates that no matched model is found), the reference point information of the reference point, in the third reference point, with mismatching, the reference point information of the reference point, in the fourth reference point, with mismatching, and the reference point information of the recommended reference point.

Further, in a case in which the first feedback information includes the reference point information of the recommended reference point, the first communication device assesses the received recommended reference point, and sends feedback information about whether to accept the recommended reference point.

In an embodiment of this application, the method further includes:
receiving, by the first communication device from the second communication device, a second request, where the second request includes reference point information identifying a fifth reference point corresponding to an input of a model and reference point information identifying a sixth reference point corresponding to an output of the model;
performing model matching, by the first communication device based on a set of reference points of the first communication device according to the second request, to obtain second feedback information, where the set of reference points of the first communication device includes the set of target reference points; and
sending, by the first communication device to the second communication device, the second feedback information.

In this embodiment, the first communication device is an end that receives the request for the model, or may be understood as an end that sends the model; and the second communication device is an end that receives the model.

The first communication device performs model matching based on the set of reference points of the first communication device and the reference point information of the reference points in the second request, and feeds back the second feedback information to the second communication device.

The set of reference points of the first communication device includes the set of target reference points. The following two cases are included.

If the set of target reference points is a set obtained through reference point configuration based on the set of first reference points, the set of target reference points is the set of reference points of the first communication device. For example, if the set of first reference points includes a reference point A, a reference point B, and a reference point C, and a reference point D is added based on reference point configuration, where there is an association relationship between the reference point D and the reference point A, the set of target reference points includes the reference point A, the reference point B, the reference point C, and the reference point D.

If the set of target reference points is a subset of a set obtained through reference point configuration based on the set of first reference points, the set of reference points of the first communication device is a set obtained by updating the set of first reference points based on the set of target reference points. For example, if the set of first reference points includes a reference point A, a reference point B, and a reference point C, and a reference point D is added based on reference point configuration, where there is an association relationship between the reference point D and the reference point A, the set of target reference points includes only the reference point A and the reference point D, and the set of reference points of the first communication device is the set obtained by updating the set of first reference points based on the set of target reference points. To be specific, the set of reference points of the first communication device includes the reference point A, the reference point B, the reference point C, and the reference point D.

The second feedback information includes at least one of the following:
first acknowledgment information indicating successful matching;
model information of a second target model, where an input of the second target model corresponds to the fifth reference point, and an output of the second target model corresponds to the sixth reference point;
a second reference point alignment request;
second acknowledgment information indicating failed matching;
reference point information identifying a reference point, in the fifth reference point, that fails to match a first target reference point, and reference point information identifying a reference point, in the sixth reference point, that fails to match a second target reference point, where the first target reference point is a reference point corresponding to an input of a third model, the second target reference point is a reference point corresponding to an output of the third model, and the third model is a model determined based on the set of reference points of the first communication device; and
reference point information of a recommended reference point.

Specifically, as the first communication device performs model matching according to the second request, if the model that matches the reference point in the second request is found, for example, if the second target model is found, the input of the second target model corresponds to the fifth reference point, and the output of the second target model corresponds to the sixth reference point, it indicates that a matched model is found. In this case, the second feedback information may include at least one of the following: the first acknowledgment information (for example, that the first acknowledgment information is 1 indicates that the matched model is found), and the second target model that is found.

If the first communication device has not found a matched model, and a cause for mismatching is that the reference points of the first communication device and the second communication device are misaligned, the second feedback information may include at least one of the following: the second acknowledgment information (for example, that the acknowledgment information is 0 initiates that no matched model is found), and a request message for initiating reference point alignment.

If the first communication device has not found a matched model, but reference points of the first communication device and the second communication device are aligned, as a search failure has another cause, for example, the first communication device does not have a corresponding model, the first feedback information may include at least one of the following: the second acknowledgment information (for example, that the acknowledgment information is 0 initiates that no matched model is found), the reference point information of the reference point, in the fifth reference point, with mismatching, the reference point information of the reference point, in the sixth reference point, with mismatching, and the reference point information of the recommended reference point.

In an embodiment of this application, the method further includes:
receiving, by the first communication device from the second communication device, first model information, where the first model information includes reference point information identifying a seventh reference point corresponding to an input of a model and reference point information identifying an eighth reference point corresponding to an output of the model;
performing model matching, by the first communication device based on the first model information and a set of reference points of the first communication device, to obtain third feedback information, where the set of reference points of the first communication device includes the set of target reference points; and
sending, by the first communication device to the second communication device, the third feedback information.

In this embodiment, a model is not sent according to a request, but is directly sent by the second communication device. The first communication device is an end that receives the model, that is, a model receiving end, and the second communication device is an end that sends the model, that is, a model sending end.

For determining the set of reference points of the first communication device, refer to the foregoing related descriptions. Details are not described herein again.

In the foregoing descriptions, the third feedback information includes at least one of the following:
first acknowledgment information indicating successful matching;
a third reference point alignment request;
second acknowledgment information indicating failed matching;
reference point information identifying a reference point, in the seventh reference point, that fails to match a first target reference point, and reference point information identifying a reference point, in the eighth reference point, that fails to match a second target reference point, where the first target reference point is a reference point corresponding to an input of a third model, the second target reference point is a reference point corresponding to an output of the third model, and the third model is a model determined based on the set of reference points of the first communication device; and
reference point information of a recommended reference point.

In an embodiment of this application, the method further includes:
sending, by the first communication device, second model information, where the second model information includes reference point information identifying a ninth reference point corresponding to an input of a model and reference point information identifying a tenth reference point corresponding to an output of the model; and
receiving, by the first communication device, fourth feedback information.

In this embodiment, a model is not sent according to a request, but is directly sent by the first communication device. The second communication device is an end that receives the model, that is, a model receiving end, and the first communication device is an end that sends the model, that is, a model sending end.

In the foregoing descriptions, the fourth feedback information includes at least one of the following:
first acknowledgment information indicating successful matching;
a fourth reference point alignment request;
second acknowledgment information indicating failed matching;
reference point information identifying a reference point, in the ninth reference point, with mismatching, and reference point information identifying a reference point, in the tenth reference point, with mismatching; and
reference point information of a recommended reference point.

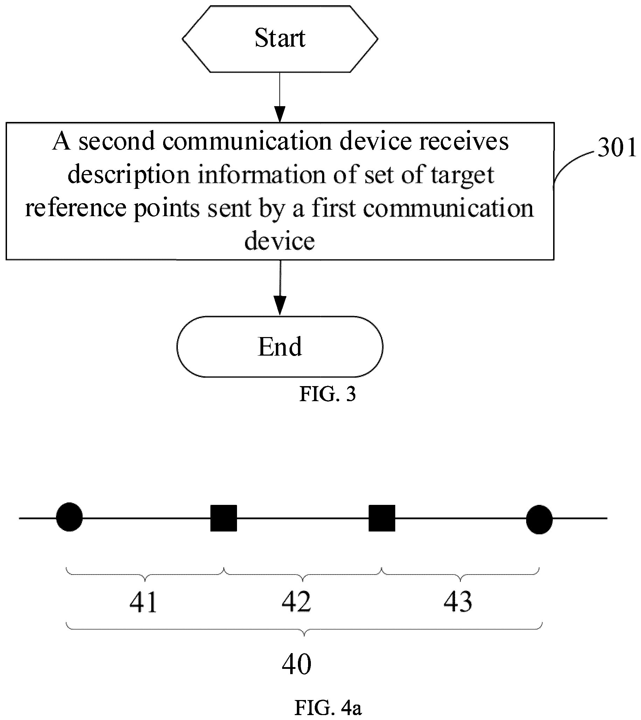

FIG. 3 is a flowchart of an information obtaining method according to an embodiment of this application. As shown in FIG. 3, the information obtaining method provided in this embodiment of this application includes the following steps.

Step 301: receiving, by a second communication device from a first communication device, description information of a set of target reference points, where a reference point in the set of target reference points is a process node in a communication process, and the set of target reference points includes a reference point corresponding to an input of a first model and/or a reference point corresponding to an output of a second model.

Specifically, the second communication device may be any device in a communication system. The description information of the set of target reference points may be sent by the first communication device.

If the set of target reference points is obtained by the first communication device performing reference point configuration on the set of first reference points, the set of target reference points may be a set obtained through reference point configuration on the set of first reference points, or the set of target reference points includes a reference point, in the set of first reference points, that has been through a change because of reference point configuration, that is, the set of target reference points is a subset of the set obtained through reference point configuration on the set of first reference points.

The first model and the second model may be a same model or different models. This is not limited herein. The set of target reference points may include the reference point corresponding to the input of the first model, may include the reference point corresponding to the output of the second model, or may include both the reference point corresponding to the input of the first model and the reference point corresponding to the output of the second model.

The set of target reference points includes one or more reference points. The reference point is a process node in a communication process. The communication process may include an information processing process, an event process, and a signaling process.

In this embodiment, the second communication device receives the description information of the set of target reference points from the first communication device, where the reference point in the set of target reference points is the process node in the communication process, and the set of target reference points includes the reference point corresponding to the input of the first model and/or the reference point corresponding to the output of the second model. In the foregoing descriptions, the input of the first model and/or the output of the second model each correspond to a reference point, so that the input of the first model and/or the output of the second model can separately be determined based on description information of reference points. In this way, the communication device can determine an input and output of a model based on description information of a reference point during model interaction, to reduce model interaction overheads.

The description information of the set of target reference points includes description information of the reference point in the set of target reference points, and the description information of the reference point includes at least one of the following:
an identity symbol of the reference point;
process location information of the reference point in the communication process;
a physical meaning corresponding to the process location information of the reference point in the communication process;
a data format corresponding to the process location information of the reference point in the communication process; and
a topological relationship between associated reference points.

In an embodiment of this application, the method further includes: sending, by the second communication device to the first communication device, trigger information. The trigger information includes at least one of the following:
first information, where the first information indicates to add a new process, and the new process corresponds to the first reference point, or the new process corresponds to a reference point in a set of reference points of the second communication device, where the set of reference points of the second communication device does not include the first reference point;
second information, where the second information indicates to add a new model, where the new model corresponds to the first reference point, or the new model corresponds to a reference point in the set of reference points of the second communication device;
third information, where the third information indicates that a second reference point does not correspond to an input or output of any model within a preset time period, and the set of reference points of the second communication device includes the second reference point; and
fourth information, where the fourth information indicates that a function of the second reference point is replaced with a new reference point.

Specifically, the set of reference points of the second communication device may be a set of reference points that already exists on the second communication device before the set of target reference points is received, where for example, the existing set of reference points may be the set of first reference points; or may be a set of reference points determined after the set of target reference points is received. If the set of reference points of the second communication device is the set obtained based on the set of target reference points, the following two cases are included.

If the set of target reference points is a set obtained through reference point configuration based on the set of first reference points, the set of reference points of the second communication device is the set of target reference points. For example, if the set of first reference points includes a reference point A, a reference point B, and a reference point C, and a reference point D is added based on reference point configuration, where there is an association relationship between the reference point D and the reference point A, the set of target reference points includes the reference point A, the reference point B, the reference point C, and the reference point D.

If the set of target reference points is a subset of a set obtained through reference point configuration based on the set of first reference points, the set of reference points of the second communication device is a set obtained by updating the set of first reference points based on the set of target reference points. For example, if the set of first reference points includes a reference point A, a reference point B, and a reference point C, and a reference point D is added based on reference point configuration, where there is an association relationship between the reference point D and the reference point A, the set of target reference points includes only the reference point A and the reference point D, and the set of reference points of the second communication device is the set obtained by updating the set of first reference points based on the set of target reference points.

The second communication device may be a model sending end, or may be a model receiving end.

In an embodiment of this application, the method further includes:
receiving, by the second communication device from the first communication device, a first request, where the first request includes reference point information identifying a third reference point corresponding to an input of a model and reference point information identifying a fourth reference point corresponding to an output of the model;
performing model matching, by the second communication device based on a set of reference points of the second communication device according to the first request, to obtain first feedback information, where the set of reference points of the second communication device includes the set of target reference points; and
sending, by the second communication device to the first communication device, the first feedback information.

In this embodiment, the first communication device obtains a model according to the first request. The first communication device is an end that requests for the model, or may be understood as an end that requires the model. The second communication device is an end that sends the model. The first request includes the third reference point corresponding to the input of the model and the fourth reference point corresponding to the output of the model.

The second communication device searches, based on the reference point in the first request, for a model that matches the reference point, and feeds back the first feedback information to the first communication device. The first communication device receives the first feedback information.

The first feedback information includes at least one of the following:
first acknowledgment information indicating successful matching;
model information of a first target model, where an input of the first target model corresponds to the third reference point, and an output of the first target model corresponds to the fourth reference point;
a first reference point alignment request;
second acknowledgment information indicating failed matching;
a reference point, in the third reference point, that fails to match a first target reference point, and a reference point, in the fourth reference point, that fails to match a second target reference point, where the first target reference point is a reference point corresponding to an input of a third model, the second target reference point is a reference point corresponding to an output of the third model, and the third model is a model determined based on the set of reference points of the second communication device; and
reference point information of a recommended reference point.

Specifically, after the search (or matching) performed by the second communication device, if the model that matches the reference point in the first request is found, for example, if the first target model is found, the input of the first target model corresponds to the third reference point, and the output of the first target model corresponds to the fourth reference point, it indicates that a matched model is found. In this case, the first feedback information may include at least one of the following: the first acknowledgment information (for example, that the first acknowledgment information is 1 indicates that the matched model is found), and the first target model that is found.

If the second communication device has not found a matched model, and a cause for mismatching is that reference points of the second communication device and the first communication device are misaligned, the first feedback information may include at least one of the following: the second acknowledgment information (for example, that the acknowledgment information is 0 initiates that no matched model is found), and a request message for initiating reference point alignment.

If the second communication device has not found a matched model, but reference points of the second communication device and the first communication device are aligned, as a search failure has another cause, for example, the second communication device does not have a corresponding model, the first feedback information may include at least one of the following: the second acknowledgment information (for example, that the acknowledgment information is 0 initiates that no matched model is found), the reference point information of the reference point, in the third reference point, with mismatching, the reference point information of the reference point, in the fourth reference point, with mismatching, and the reference point information of the recommended reference point.

Further, the method further includes:
receiving, by the second communication device, feedback information about whether the first communication device accepts the recommended reference point.

In an embodiment of this application, the method further includes:
sending, by the second communication device to the first communication device, a second request, where the second request includes reference point information identifying a fifth reference point corresponding to an input of a model and reference point information identifying a sixth reference point corresponding to an output of the model; and
receiving, by the second communication device, second feedback information.

In this embodiment, the first communication device is an end that receives the request for the model, or may be understood as an end that sends the model; and the second communication device is an end that receives the model.

The second feedback information includes at least one of the following:
first acknowledgment information indicating successful matching;
model information of a second target model, where an input of the second target model corresponds to the fifth reference point, and an output of the second target model corresponds to the sixth reference point;
a second reference point alignment request;
second acknowledgment information indicating failed matching;
reference point information identifying a reference point, in the fifth reference point, with mismatching, and reference point information identifying a reference point, in the sixth reference point, with mismatching; and
reference point information of a recommended reference point.

In an embodiment of this application, the method further includes:
sending, by the second communication device, first model information, where the first model information includes reference point information identifying a seventh reference point corresponding to an input of a model and reference point information identifying an eighth reference point corresponding to an output of the model; and
receiving, by the second communication device, third feedback information.

In this embodiment, a model is not sent according to a request, but is directly sent by the second communication device.

The third feedback information includes at least one of the following:
first acknowledgment information indicating successful matching;
a third reference point alignment request;
second acknowledgment information indicating failed matching;
reference point information identifying a reference point, in the seventh reference point, with mismatching, and reference point information identifying a reference point, in the eighth reference point, with mismatching; and
reference point information of a recommended reference point.

In an embodiment of this application, the method further includes:
receiving, by the second communication device, second model information, where the second model information includes reference point information identifying a ninth reference point corresponding to an input of a model and reference point information identifying a tenth reference point corresponding to an output of the model;
performing model matching, by the second communication device based on the second model information and a set of reference points of the second communication device, to obtain fourth feedback information, where the set of reference points of the second communication device includes the set of target reference points; and
sending, by the second communication device, the fourth feedback information.

In this embodiment, a model is not sent according to a request, but is, for example, directly sent by the first communication device. The second communication device is an end that receives the model, that is, a model receiving end, and the first communication device is an end that sends the model, that is, a model sending end.

The fourth feedback information includes at least one of the following:
first acknowledgment information indicating successful matching;
a fourth reference point alignment request;
second acknowledgment information indicating failed matching;
reference point information identifying a reference point, in the ninth reference point, that fails to match a first target reference point, and reference point information identifying a reference point, in the tenth reference point, that fails to match a second target reference point, where the first target reference point is a reference point corresponding to an input of a third model, the second target reference point is a reference point corresponding to an output of the third model, and the third model is a model determined based on the set of reference points of the second communication device; and
reference point information of a recommended reference point.

The information obtaining method provided in embodiments of this application is described below with examples for describing this application.

### 1. Definition of reference points

### A reference point in an information processing process:

For example, in a baseband signal processing process, the whole process is further classified by different functional units (or functions, units, or basic units) and includes at least one of the following: channel coding, modulation, resource mapping, multi-antenna precoding (multi-antenna precoding), fast Fourier transform (Fast Fourier Transform, FFT)/inverse fast Fourier transform (Inverse Fast Fourier Transform, IFFT), and the like. Baseband signal processing is implemented by at least one module, and an input or output location of each module may be defined as one reference point.

### A reference point in an event or signaling process:

A process node included in a physical layer process may be used as a reference point. The physical layer process includes an initial cell search process, a random access procedure, a beam management process, and the like. A start point or an end point in each process may be used as one reference point. A subdivided process in each process may further generate a reference point. For example, in a contention-based random access procedure, subdivision may be as follows: a random access preamble (random access preamble) transmission message 1 (Msg1), a random access response (Random Access Response, RAR) (Msg2), an uplink scheduling transmission (Msg3), and contention resolution (Msg4). A start point or an end point in each of the foregoing four substeps may be used as one reference point.

Similarly, in wireless communication, a start point or an end point in another event or signaling process and an internal node in each process may be used as a reference point.

### 2. Reference point maintenance

During evolution of a wireless communication system, internal division of a current process or module may be required, to extract an intermediate result or optimize a part of the process/module. A new reference point may be needed as a new function or a new process may be generated. A modulation functional unit is used an example. A modulation module 10 may be a structure that can be divided into three modules in serial. A module 411 is configured to select a constellation diagram pattern (pattern), a module 42 is configured to select a constellation point (to be specific, select, based on input data, a specific constellation point from a selected constellation diagram pattern), and a module 43 is configured for amplitude processing and phase processing for the constellation point. In this case, two reference points need to be added between a reference point corresponding to an input location and a reference point of an output location of the original modulation module. As shown in FIG. 4a, in the figure, a sound circle represents an original reference point, and a square represents a new reference point.

With the development of the wireless communication system, some functions or processes may need to be removed, or a plurality of original functions or processes may be combined into one function or process. In either case, a reference point needs to be deleted. For example, in layer mapping and precoding, according to an implementation in a current system, a layer mapping output location needs to be defined as a reference point, and the reference point is used as an input for precoding. The foregoing two functions may be implemented with one step in the future, and a signal is mapped to a plurality of antennas. In this case, the original reference point corresponding to the layer mapping output location needs to be deleted.

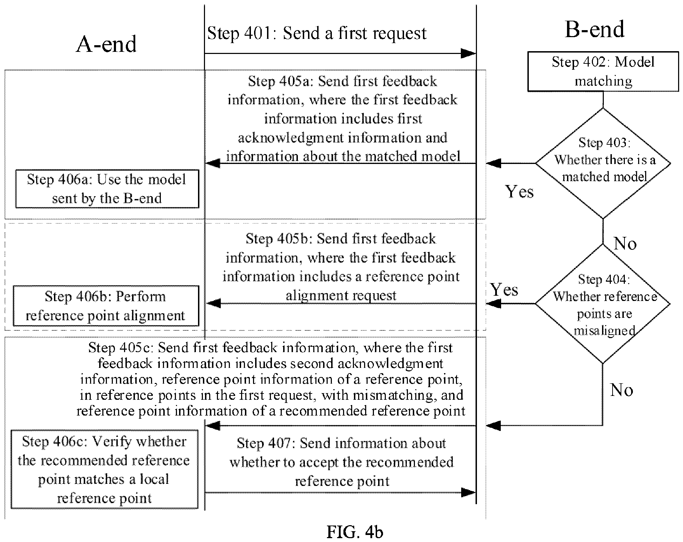

As shown in FIG. 4b, in a model update process based on a reference point, an A-end sends a request for a model. The A-end is the first communication device, and a B-end is the second communication device. Alternatively, the A-end is the second communication device, and the B-end is the first communication device. The model update process includes the following steps.

Step 401: The A-end sends a first request, where the first request includes a third reference point corresponding to an input of a model and a fourth reference point corresponding to an output of the model.

Step 402: The B-end receives the first request, and performs model matching based on the third reference point and the fourth reference point that are carried in the first request.

Step 403: If the B-end matches the model of which the input corresponds to the third reference point and the output corresponds to the fourth reference point, step 405a is performed; or if the B-end does not match the model, step 404 is performed.

Step 404: Whether reference points of the A-end and the B-end are misaligned is determined, and if the reference points are misaligned, step 405b is performed; or if the reference points are aligned, step 405c is performed.

Step 405a: The B-end sends first feedback information, where the first feedback information includes first acknowledgment information and the matched model, and step 406a is performed.

Step 406a: The A-end uses the model sent by the B-end.

Step 405b: The B-end sends first feedback information, where the first feedback information includes a reference point alignment request, and step 406b is performed.

Step 406b: The A-end performs reference point alignment.

Step 405c: The B-end sends first feedback information, where the first feedback information includes second acknowledgment information, reference point information of a reference point, in the reference points in the first request, with mismatching, and reference point information of a recommended reference point, and step 406c is performed.

Step 406c: The A-end verifies whether the recommended reference point matches a local reference point, and step 407 is performed.

Step 407: The A-end sends information about whether to accept the recommended reference point.

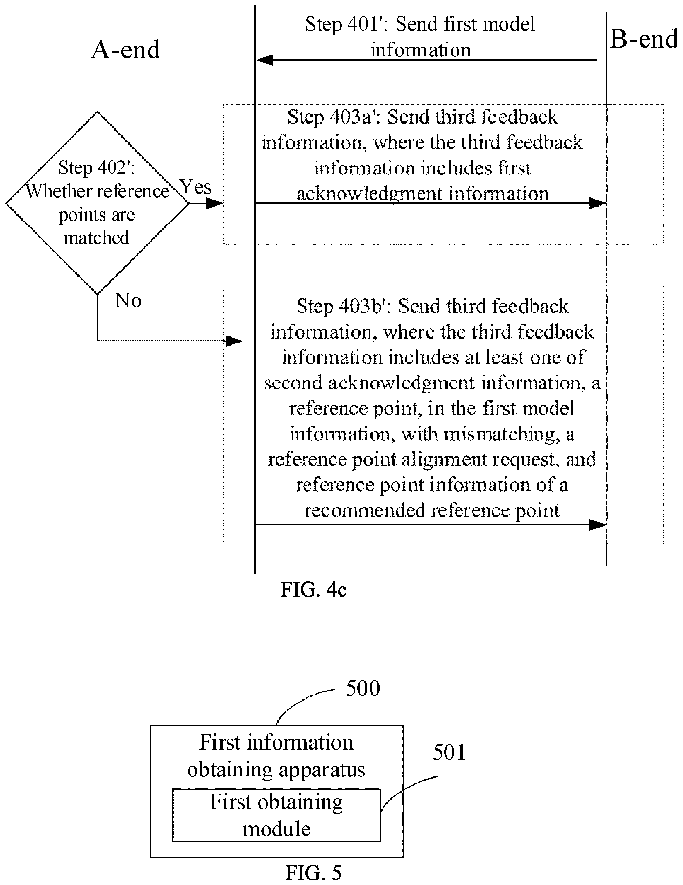

As shown in FIG. 4c, in a model update process based on a reference point, a B-end directly sends a stored model. In other words, the B-end does not need to send the model according to a request for the model. An A-end is the first communication device, and the B-end is the second communication device. Alternatively, the A-end is the second communication device, and the B-end is the first communication device. The model update process includes the following steps.

Step 401': The B-end sends first model information.

Step 402': The A-end performs reference point matching based on a reference point in the first model information, and if the reference point is matched, step 403a is performed; or if the reference point is not matched, step 403b is performed.

Step 403a': The A-end sends third feedback information to the B-end, where the third feedback information includes first acknowledgment information.

Step 403b': The A-end sends third feedback information to the B-end, where the third feedback information includes at least one of second acknowledgment information, reference point information of a reference point, in the first model information, with mismatching, a reference point alignment request, and reference point information of a recommended reference point.

In the information obtaining method according to embodiments of this application, a working location, an input, and an output of a model may be determined by using unified description information based on a reference point, to reduce overheads during model interaction and provide a basis for flexible system self-evolution.

It should be noted that the information obtaining method provided in embodiments of this application may be performed by an information obtaining apparatus, or a control module that is in the information obtaining apparatus and that is configured to perform the information obtaining method.

In the following embodiments, that the information obtaining apparatus performs the information obtaining method is used as an example to describe the information obtaining apparatus provided in embodiments of this application.

FIG. 5 is a diagram of a structure of an information obtaining apparatus according to an embodiment of this application. A first information obtaining apparatus 500 includes:
a first obtaining module 501, configured to obtain description information of a set of target reference points, where a reference point in the set of target reference points is a process node in a communication process, and the set of target reference points includes a reference point corresponding to an input of a first model and/or a reference point corresponding to an output of a second model.

Optionally, the description information of the set of target reference points includes description information of the reference point in the set of target reference points, and the description information of the reference point includes at least one of the following:
an identity symbol of the reference point;
process location information of the reference point in the communication process;
a physical meaning corresponding to the process location information of the reference point in the communication process;
a data format corresponding to the process location information of the reference point in the communication process; and
a topological relationship between associated reference points.

Optionally, the set of target reference points is obtained by the first communication device performing reference point configuration on a pre-obtained set of first reference points, and reference point configuration includes at least one of the following:
adding a first reference point to the set of first reference points;
deleting a second reference point from the set of first reference points; and
modifying an association relationship between reference points in the set of first reference points.

Optionally, the first communication device adds a first reference point to the set of first reference points based on a first triggering condition.

Optionally, the first triggering condition includes at least one of the following:
A new process is added, where the new process corresponds to the first reference point; and
a new model is added, where the new model corresponds to the first reference point.

Optionally, the adding a first reference point to the set of first reference points includes:
configuring an association relationship between the first reference point and a reference point in the set of first reference points; and
modifying the association relationship between the reference points in the set of first reference points.

Optionally, the first communication device deletes a second reference point from the set of first reference points based on a second triggering condition.

Optionally, the second triggering condition includes at least one of the following:

The second reference point does not correspond to an input or output of any model within a preset time period; and
a function of the second reference point is replaced with a new reference point.

Optionally, the deleting a second reference point from the set of first reference points includes:
modifying an association relationship between reference points, in the set of first reference points, that are not the second reference point.

Optionally, the first communication device modifies the association relationship between the reference points in the set of first reference points based on a third triggering condition.

Optionally, the third triggering condition includes at least one of the following:
A new process is added, where the new process corresponds to the first reference point, or the new process corresponds to a reference point in the set of first reference points;
a new model is added, where the new model corresponds to the first reference point, or the new model corresponds to a reference point in the set of first reference points;
the second reference point does not correspond to an input or output of any model within a preset time period; and
a function of the second reference point is replaced with a new reference point.

Optionally, the modifying an association relationship between reference points in the set of first reference points includes at least one of the following:
configuring an association relationship between the first reference point and a reference point in the set of first reference points, and modifying an association relationship between the reference points in the set of first reference points; and
modifying an association relationship between reference points, in the set of first reference points, that are not the second reference point.

Optionally, reference point configuration is performed through triggering based on trigger information, and the trigger information includes at least one of the following:
trigger information sent by a second communication device;
trigger information obtained by the first communication device through sensing; and
trigger information carried in a control instruction.

Optionally, the trigger information includes at least one of the following:
first information, where the first information indicates to add a new process, and the new process corresponds to the first reference point, or the new process corresponds to a reference point in the set of first reference points;
second information, where the second information indicates to add a new model, and the new model corresponds to the first reference point, or the new model corresponds to a reference point in the set of first reference points;
third information, where the third information indicates that the second reference point does not correspond to an input or output of any model within a preset time period; and
fourth information, where the fourth information indicates that a function of the second reference point is replaced with a new reference point.

Optionally, the apparatus further includes:
a first sending module, configured to send the description information of the set of target reference points to a second communication device, where the set of target reference points includes a set obtained through reference point configuration on the set of first reference points, or a subset of reference points of a set obtained through reference point configuration on the set of first reference points, and the subset of reference points includes a reference point, in the set of first reference points, that has been through a change based on reference point configuration.

Optionally, a manner of sending the set of target reference points includes at least one of periodical sending, sending triggered based on an event, and sending triggered based on an instruction.

Optionally, the apparatus further includes:
a first request sending module, configured to send a first request to the second communication device, where the first request includes reference point information identifying a third reference point corresponding to an input of a model and reference point information identifying a fourth reference point corresponding to an output of the model; and
a first feedback information receiving module, configured to receive first feedback information sent by the second communication device.

Optionally, the first feedback information includes at least one of the following:
first acknowledgment information indicating successful matching;
model information of a first target model, where an input of the first target model corresponds to the third reference point, and an output of the first target model corresponds to the fourth reference point;
a first reference point alignment request;
second acknowledgment information indicating failed matching;
reference point information identifying a reference point, in the third reference point, with mismatching, and reference point information identifying a reference point, in the fourth reference point, with mismatching; and
reference point information of a recommended reference point.

Optionally, the apparatus further includes:
a second sending module, configured to: in a case in which the first feedback information includes the reference point information of the recommended reference point, send feedback information about whether to accept the recommended reference point.

Optionally, the apparatus further includes:
a second request receiving module, configured to receive a second request sent by the second communication device, where the second request includes reference point information identifying a fifth reference point corresponding to an input of a model and reference point information identifying a sixth reference point corresponding to an output of the model;
a second obtaining module, configured to perform model matching based on a set of reference points of the first communication device according to the second request, to obtain second feedback information, where the set of reference points of the first communication device includes the set of target reference points; and
a second feedback information sending module, configured to send the second feedback information to the second communication device.

Optionally, the second feedback information includes at least one of the following:
first acknowledgment information indicating successful matching;
model information of a second target model, where an input of the second target model corresponds to the fifth reference point, and an output of the second target model corresponds to the sixth reference point;
a second reference point alignment request;
second acknowledgment information indicating failed matching;
reference point information identifying a reference point, in the fifth reference point, that fails to match a first target reference point, and reference point information identifying a reference point, in the sixth reference point, that fails to match a second target reference point, where the first target reference point is a reference point corresponding to an input of a third model, the second target reference point is a reference point corresponding to an output of the third model, and the third model is a model determined based on the set of reference points of the first communication device; and
reference point information of a recommended reference point.

Optionally, the apparatus further includes:
a first model information receiving module, configured to receive first model information sent by the second communication device, where the first model information includes reference point information identifying a seventh reference point corresponding to an input of a model and reference point information identifying an eighth reference point corresponding to an output of the model;
a third obtaining module, configured to perform model matching based on the first model information and a set of reference points of the first communication device, to obtain third feedback information, where the set of reference points of the first communication device includes the set of target reference points; and
a third feedback information sending module, configured to send the third feedback information to the second communication device.

Optionally, the third feedback information includes at least one of following:
first acknowledgment information indicating successful matching;
a third reference point alignment request;
second acknowledgment information indicating failed matching;
reference point information identifying a reference point, in the seventh reference point, that fails to match a first target reference point, and reference point information identifying a reference point, in the eighth reference point, that fails to match a second target reference point, where the first target reference point is a reference point corresponding to an input of a third model, the second target reference point is a reference point corresponding to an output of the third model, and the third model is a model determined based on the set of reference points of the first communication device; and
reference point information of a recommended reference point.

Optionally, the apparatus further includes:
a second module information sending module, configured to send second model information, where the second model information includes reference point information identifying a ninth reference point corresponding to an input of a model and reference point information identifying a tenth reference point corresponding to an output of the model; and
a fourth feedback information receiving module, configured to receive fourth feedback information.

Optionally, the fourth feedback information includes at least one of the following:
first acknowledgment information indicating successful matching;
a fourth reference point alignment request;
second acknowledgment information indicating failed matching;
reference point information identifying a reference point, in the ninth reference point, with mismatching, and reference point information identifying a reference point, in the tenth reference point, with mismatching; and
reference point information of a recommended reference point.

The first information obtaining apparatus 500 provided in this embodiment of this application can implement processes implemented in the method embodiment of FIG. 2, and same technical effect is achieved. To avoid repetition, details are not described herein again.

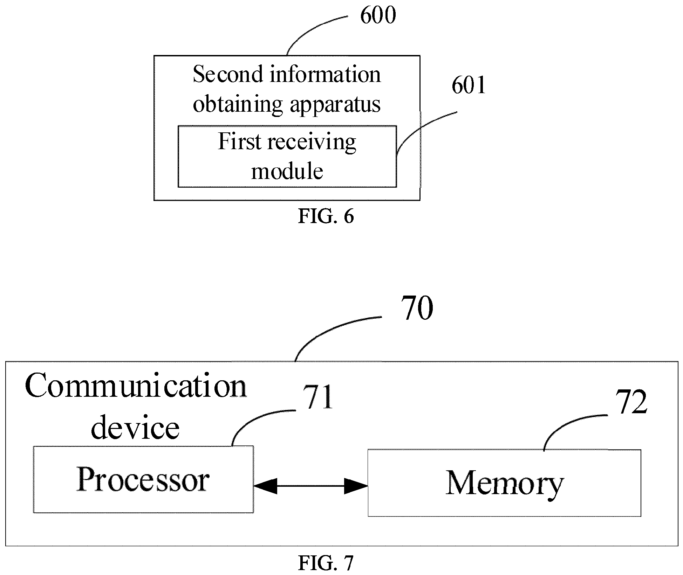

FIG. 6 is a diagram of a structure of an information obtaining apparatus according to an embodiment of this application. A second information obtaining apparatus 600 includes:
a first receiving module 601, configured to receive description information of a set of target reference points from a first communication device, where a reference point in the set of target reference points is a process node in a communication process, and the set of target reference points includes a reference point corresponding to an input of a first model and/or a reference point corresponding to an output of a second model.

Optionally, the description information of the set of target reference points includes description information of the reference point in the set of target reference points, and the description information of the reference point includes at least one of the following:
an identity symbol of the reference point;
process location information of the reference point in the communication process;
a physical meaning corresponding to the process location information of the reference point in the communication process;
a data format corresponding to the process location information of the reference point in the communication process; and
a topological relationship between associated reference points.

Optionally, the apparatus further includes a first sending module, configured to send trigger information to the first communication device.

Optionally, the trigger information includes at least one of the following:
first information, where the first information indicates to add a new process, and the new process corresponds to the first reference point, or the new process corresponds to a reference point in a set of reference points of the second communication device, where the set of reference points of the second communication device does not include the first reference point;
second information, where the second information indicates to add a new model, where the new model corresponds to the first reference point, or the new model corresponds to a reference point in the set of reference points of the second communication device;
third information, where the third information indicates that a second reference point does not correspond to an input or output of any model within a preset time period, and the set of reference points of the second communication device includes the second reference point; and
fourth information, where the fourth information indicates that a function of the second reference point is replaced with a new reference point.

Optionally, the apparatus further includes:
a first request receiving module, configured to receive a first request, where the first request includes reference point information identifying a third reference point corresponding to an input of a model and reference point information identifying a fourth reference point corresponding to an output of the model;
a first obtaining module, configured to perform model matching based on a set of reference points of the second communication device according to the first request, to obtain first feedback information, where the set of reference points of the second communication device includes the set of target reference points; and
a first feedback information sending module, configured to send the first feedback information.

Optionally, the first feedback information includes at least one of the following:
first acknowledgment information indicating successful matching;
model information of a first target model, where an input of the first target model corresponds to the third reference point, and an output of the first target model corresponds to the fourth reference point;
a first reference point alignment request;
second acknowledgment information indicating failed matching;
reference point information identifying a reference point, in the third reference point, that fails to match a first target reference point, and reference point information identifying a reference point, in the fourth reference point, that fails to match a second target reference point, where the first target reference point is a reference point corresponding to an input of a third model, the second target reference point is a reference point corresponding to an output of the third model, and the third model is a model determined based on the set of reference points of the second communication device; and
reference point information of a recommended reference point.

Optionally, the apparatus further includes:
a second receiving module, configured to receive information about whether the first communication device accepts the recommended reference point.

Optionally, the apparatus further includes:
a second request sending module, configured to send a second request to the first communication device, where the second request includes reference point information identifying a fifth reference point corresponding to an input of a model and reference point information identifying a sixth reference point corresponding to an output of the model; and
a second feedback information receiving module, configured to receive second feedback information.

Optionally, the second feedback information includes at least one of the following:
first acknowledgment information indicating successful matching;
model information of a second target model, where an input of the second target model corresponds to the fifth reference point, and an output of the second target model corresponds to the sixth reference point;
a second reference point alignment request;
second acknowledgment information indicating failed matching;
reference point information identifying a reference point, in the fifth reference point, with mismatching, and reference point information identifying a reference point, in the sixth reference point, with mismatching; and
reference point information of a recommended reference point.

Optionally, the apparatus further includes:
a first model information sending module, configured to send first model information, where the first model information includes reference point information identifying a seventh reference point corresponding to an input of a model and reference point information identifying an eighth reference point corresponding to an output of the model; and
a third feedback information receiving module, configured to receive third feedback information.

Further, the third feedback information includes at least one of following:
first acknowledgment information indicating successful matching;
a third reference point alignment request;
second acknowledgment information indicating failed matching;
reference point information identifying a reference point, in the seventh reference point, with mismatching, and reference point information identifying a reference point, in the eighth reference point, with mismatching; and
reference point information of a recommended reference point.

Optionally, the apparatus further includes:
a second module information receiving module, configured to receive second model information, where the second model information includes reference point information identifying a ninth reference point corresponding to an input of a model and reference point information identifying a tenth reference point corresponding to an output of the model;
a second obtaining module, configured to perform model matching based on the second model information and a set of reference points of the second communication device, to obtain fourth feedback information, where the set of reference points of the second communication device includes the set of target reference points; and
a fourth feedback information sending module, configured to send the fourth feedback information.

Optionally, the fourth feedback information includes at least one of the following:
first acknowledgment information indicating successful matching;
a fourth reference point alignment request;
second acknowledgment information indicating failed matching;
reference point information identifying a reference point, in the ninth reference point, that fails to match a first target reference point, and reference point information identifying a reference point, in the tenth reference point, that fails to match a second target reference point, where the first target reference point is a reference point corresponding to an input of a third model, the second target reference point is a reference point corresponding to an output of the third model, and the third model is a model determined based on the set of reference points of the second communication device; and
reference point information of a recommended reference point.

The second information obtaining apparatus 600 provided in this embodiment of this application can implement processes implemented in the method embodiment of FIG. 3, and same technical effect is achieved. To avoid repetition, details are not described herein again.

Optionally, as shown in FIG. 7, an embodiment of this application further provides a communication device 70, including a processor 71, a memory 72, and a program or an instruction that is stored in the memory 72 and that can be run on the processor 71. For example, when the communication device 70 is a terminal, and the program or the instruction is executed by the processor 71 to implement processes in the information obtaining method embodiment shown in FIG. 2 or FIG. 3, and same technical effect can be achieved. When the communication device 70 is a network side device, the program or the instruction is executed by the processor 71 to implement processes in the information obtaining method embodiment shown in FIG. 2 or FIG. 3, and same technical effect can be achieved.

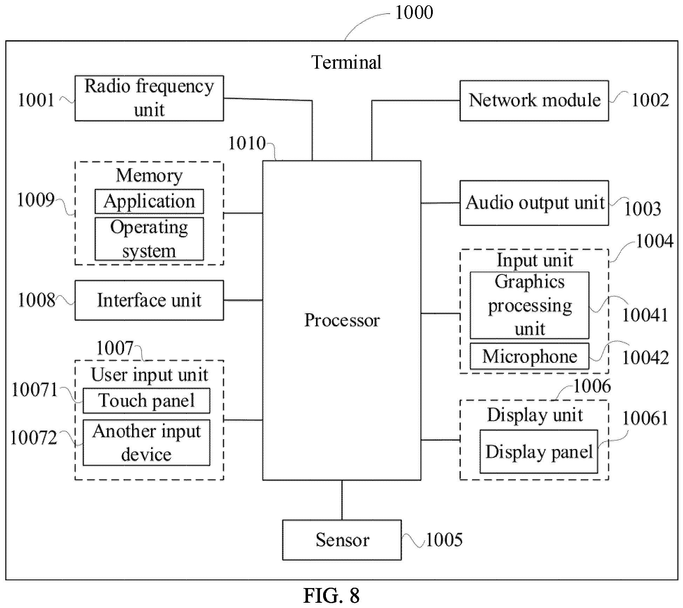

FIG. 8 is a schematic diagram of a hardware structure of a terminal according to an embodiment of this application.

A terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (such as a battery) that supplies power to each component. The power supply may be logically connected to the processor 1010 by using a power supply management system, to implement functions such as charging and discharging management, and power consumption management by using the power supply management system. The structure of the terminal shown in FIG. 8 constitutes no limitation on the terminal. The terminal may include more or fewer components than those shown in the figure, combine some components, or have different component arrangements. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061. The display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 1001 sends the downlink data to the processor 1010 for processing, and sends uplink data to the base station. Usually, the radio frequency unit 1001 includes but is not limited to an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area. The program or instruction storage area may store an operating system, an application or an instruction required by at least one function (for example, a sound playing function or an image playing function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1010 may include one or more processing units. Optionally, an application processor and a modem processor may be integrated into the processor 1010. The application processor mainly processes an operating system, a user interface, an application, an instruction, or the like. The modem processor mainly processes wireless communication, for example, a baseband processor. It may be understood that the modem processor may alternatively not be integrated into the processor 1010.

In an embodiment of this application, the processor 1010 is configured to obtain description information of a set of target reference points, where a reference point in the set of target reference points is a process node in a communication process, and the set of target reference points includes a reference point corresponding to an input of a first model and/or a reference point corresponding to an output of a second model.

Optionally, the description information of the set of target reference points includes description information of the reference point in the set of target reference points, and the description information of the reference point includes at least one of the following:
an identity symbol of the reference point;
process location information of the reference point in the communication process;
a physical meaning corresponding to the process location information of the reference point in the communication process;
a data format corresponding to the process location information of the reference point in the communication process; and
a topological relationship between associated reference points.

Optionally, the set of target reference points is obtained by the first communication device performing reference point configuration on a pre-obtained set of first reference points, and reference point configuration includes at least one of the following:
adding a first reference point to the set of first reference points;
deleting a second reference point from the set of first reference points; and
modifying an association relationship between reference points in the set of first reference points.

Optionally, the first communication device adds a first reference point to the set of first reference points based on a first triggering condition.

Optionally, the first triggering condition includes at least one of the following:

A new process is added, where the new process corresponds to the first reference point; and
a new model is added, where the new model corresponds to the first reference point.

Optionally, the adding a first reference point to the set of first reference points includes:
configuring an association relationship between the first reference point and a reference point in the set of first reference points; and
modifying the association relationship between the reference points in the set of first reference points.

Optionally, the first communication device deletes a second reference point from the set of first reference points based on a second triggering condition.

Optionally, the second triggering condition includes at least one of the following:

The second reference point does not correspond to an input or output of any model within a preset time period; and
a function of the second reference point is replaced with a new reference point.

Optionally, the deleting a second reference point from the set of first reference points includes:
modifying an association relationship between reference points, in the set of first reference points, that are not the second reference point.

Optionally, the first communication device modifies the association relationship between the reference points in the set of first reference points based on a third triggering condition.

Optionally, the third triggering condition includes at least one of the following:
A new process is added, where the new process corresponds to the first reference point, or the new process corresponds to a reference point in the set of first reference points;
a new model is added, where the new model corresponds to the first reference point, or the new model corresponds to a reference point in the set of first reference points;
the second reference point does not correspond to an input or output of any model within a preset time period; and
a function of the second reference point is replaced with a new reference point.

Optionally, the modifying an association relationship between reference points in the set of first reference points includes at least one of the following:
configuring an association relationship between the first reference point and a reference point in the set of first reference points, and modifying an association relationship between the reference points in the set of first reference points; and
modifying an association relationship between reference points, in the set of first reference points, that are not the second reference point.

Optionally, reference point configuration is performed through triggering based on trigger information, and the trigger information includes at least one of the following:
trigger information sent by a second communication device;
trigger information obtained by the first communication device through sensing; and
trigger information carried in a control instruction.

Optionally, the trigger information includes at least one of the following:
first information, where the first information indicates to add a new process, and the new process corresponds to the first reference point, or the new process corresponds to a reference point in the set of first reference points;
second information, where the second information indicates to add a new model, and the new model corresponds to the first reference point, or the new model corresponds to a reference point in the set of first reference points;
third information, where the third information indicates that the second reference point does not correspond to an input or output of any model within a preset time period; and
fourth information, where the fourth information indicates that a function of the second reference point is replaced with a new reference point.

Optionally, the radio frequency unit 1001 is configured to send the description information of the set of target reference points to a second communication device, where the set of target reference points includes a set obtained through reference point configuration on the set of first reference points, or a subset of reference points of a set obtained through reference point configuration on the set of first reference points, and the subset of reference points includes a reference point, in the set of first reference points, that has been through a change based on reference point configuration.

Optionally, a manner of sending the set of target reference points includes at least one of periodical sending, sending triggered based on an event, and sending triggered based on an instruction.

Optionally, the radio frequency unit 1001 is further configured to: send a first request to the second communication device, where the first request includes reference point information identifying a third reference point corresponding to an input of a model and reference point information identifying a fourth reference point corresponding to an output of the model; and receive first feedback information sent by the second communication device.

Optionally, the first feedback information includes at least one of the following:
first acknowledgment information indicating successful matching;
model information of a first target model, where an input of the first target model corresponds to the third reference point, and an output of the first target model corresponds to the fourth reference point;
a first reference point alignment request;
second acknowledgment information indicating failed matching;
reference point information identifying a reference point, in the third reference point, with mismatching, and reference point information identifying a reference point, in the fourth reference point, with mismatching; and
reference point information of a recommended reference point.

Optionally, the radio frequency unit 1001 is further configured to: in a case in which the first feedback information includes the reference point information of the recommended reference point, send information about whether to accept the recommended reference point.

Optionally, the radio frequency unit 1001 is further configured to receive a second request sent by the second communication device, where the second request includes reference point information identifying a fifth reference point corresponding to an input of a model and reference point information identifying a sixth reference point corresponding to an output of the model.

The processor 1010 is configured to perform model matching based on a set of reference points of the first communication device according to the second request, to obtain second feedback information, where the set of reference points of the first communication device includes the set of target reference points.

The radio frequency unit 1001 is further configured to send the second feedback information to the second communication device.

Optionally, the second feedback information includes at least one of the following:
first acknowledgment information indicating successful matching;
model information of a second target model, where an input of the second target model corresponds to the fifth reference point, and an output of the second target model corresponds to the sixth reference point;
a second reference point alignment request;
second acknowledgment information indicating failed matching;
reference point information identifying a reference point, in the fifth reference point, that fails to match a first target reference point, and reference point information identifying a reference point, in the sixth reference point, that fails to match a second target reference point, where the first target reference point is a reference point corresponding to an input of a third model, the second target reference point is a reference point corresponding to an output of the third model, and the third model is a model determined based on the set of reference points of the first communication device; and
reference point information of a recommended reference point.

Optionally, the radio frequency unit 1001 is further configured to receive first model information sent by the second communication device, where the first model information includes reference point information identifying a seventh reference point corresponding to an input of a model and reference point information identifying an eighth reference point corresponding to an output of the model.

The processor 1010 is further configured to perform model matching based on the first model information and a set of reference points of the first communication device, to obtain third feedback information, where the set of reference points of the first communication device includes the set of target reference points.

The radio frequency unit 1001 is further configured to send the third feedback information to the second communication device.

Optionally, the third feedback information includes at least one of following:
first acknowledgment information indicating successful matching;
a third reference point alignment request;
second acknowledgment information indicating failed matching;
reference point information identifying a reference point, in the seventh reference point, that fails to match a first target reference point, and reference point information identifying a reference point, in the eighth reference point, that fails to match a second target reference point, where the first target reference point is a reference point corresponding to an input of a third model, the second target reference point is a reference point corresponding to an output of the third model, and the third model is a model determined based on the set of reference points of the first communication device; and
reference point information of a recommended reference point.

Optionally, the radio frequency unit 1001 is further configured to: send second model information, where the second model information includes reference point information identifying a ninth reference point corresponding to an input of a model and reference point information identifying a tenth reference point corresponding to an output of the model; and receive fourth feedback information.

Optionally, the fourth feedback information includes at least one of the following:
first acknowledgment information indicating successful matching;
a fourth reference point alignment request;
second acknowledgment information indicating failed matching;
reference point information identifying a reference point, in the ninth reference point, with mismatching, and reference point information identifying a reference point, in the tenth reference point, with mismatching; and
reference point information of a recommended reference point.

In another embodiment of this application, the radio frequency unit module 1001 is configured to receive description information of a set of target reference points from the first communication device, where a reference point in the set of target reference points is a process node in a communication process, and the set of target reference points includes a reference point corresponding to an input of a first model and/or a reference point corresponding to an output of a second model.

Optionally, the description information of the set of target reference points includes description information of the reference point in the set of target reference points, and the description information of the reference point includes at least one of the following:
an identity symbol of the reference point;
process location information of the reference point in the communication process;
a physical meaning corresponding to the process location information of the reference point in the communication process;
a data format corresponding to the process location information of the reference point in the communication process; and
a topological relationship between associated reference points.

Optionally, the radio frequency unit 1001 is further configured to send trigger information to the first communication device.

Optionally, the trigger information includes at least one of the following:
first information, where the first information indicates to add a new process, and the new process corresponds to the first reference point, or the new process corresponds to a reference point in a set of reference points of the second communication device, where the set of reference points of the second communication device does not include the first reference point;
second information, where the second information indicates to add a new model, where the new model corresponds to the first reference point, or the new model corresponds to a reference point in the set of reference points of the second communication device;
third information, where the third information indicates that a second reference point does not correspond to an input or output of any model within a preset time period, and the set of reference points of the second communication device includes the second reference point; and
fourth information, where the fourth information indicates that a function of the second reference point is replaced with a new reference point.

Optionally, the radio frequency unit 1001 is further configured to receive a first request, where the first request includes reference point information identifying a third reference point corresponding to an input of a model and reference point information identifying a fourth reference point corresponding to an output of the model.

The processor 1010 is configured to perform model matching based on a set of reference points of the second communication device according to the first request, to obtain first feedback information, where the set of reference points of the second communication device includes the set of target reference points.

The radio frequency unit 1001 is further configured to send the first feedback information.

Optionally, the first feedback information includes at least one of the following:
first acknowledgment information indicating successful matching;
model information of a first target model, where an input of the first target model corresponds to the third reference point, and an output of the first target model corresponds to the fourth reference point;
a first reference point alignment request;
second acknowledgment information indicating failed matching;
a reference point, in the third reference point, that fails to match a first target reference point, and a reference point, in the fourth reference point, that fails to match a second target reference point, where the first target reference point is a reference point corresponding to an input of a third model, the second target reference point is a reference point corresponding to an output of the third model, and the third model is a model determined based on the set of reference points of the second communication device; and
reference point information of a recommended reference point.

Optionally, the radio frequency unit 1001 is further configured to receive information about whether the first communication device accepts the recommended reference point.

Optionally, the radio frequency unit 1001 is further configured to: send a second request to the first communication device, where the second request includes reference point information identifying a fifth reference point corresponding to an input of a model and reference point information identifying a sixth reference point corresponding to an output of the model; and receive second feedback information.

Optionally, the second feedback information includes at least one of the following:
first acknowledgment information indicating successful matching;
model information of a second target model, where an input of the second target model corresponds to the fifth reference point, and an output of the second target model corresponds to the sixth reference point;
a second reference point alignment request;
second acknowledgment information indicating failed matching;
reference point information identifying a reference point, in the fifth reference point, with mismatching, and reference point information identifying a reference point, in the sixth reference point, with mismatching; and
reference point information of a recommended reference point.

Optionally, the radio frequency unit 1001 is further configured to: send first model information, where the first model information includes reference point information identifying a seventh reference point corresponding to an input of a model and reference point information identifying an eighth reference point corresponding to an output of the model; and receive third feedback information.

Optionally, the third feedback information includes at least one of following:
first acknowledgment information indicating successful matching;
a third reference point alignment request;
second acknowledgment information indicating failed matching;
reference point information identifying a reference point, in the seventh reference point, with mismatching, and reference point information identifying a reference point, in the eighth reference point, with mismatching; and
reference point information of a recommended reference point.

Optionally, the radio frequency unit 1001 is further configured to receive second model information, where the second model information includes reference point information identifying a ninth reference point corresponding to an input of a model and reference point information identifying a tenth reference point corresponding to an output of the model.

The processor 1010 is configured to perform model matching based on the second model information and a set of reference points of the second communication device, to obtain fourth feedback information, where the set of reference points of the second communication device includes the set of target reference points.

The radio frequency unit 1001 is further configured to send fourth feedback information.

Optionally, the fourth feedback information includes at least one of the following:
first acknowledgment information indicating successful matching;
a fourth reference point alignment request;
second acknowledgment information indicating failed matching;
reference point information identifying a reference point, in the ninth reference point, that fails to match a first target reference point, and reference point information identifying a reference point, in the tenth reference point, that fails to match a second target reference point, where the first target reference point is a reference point corresponding to an input of a third model, the second target reference point is a reference point corresponding to an output of the third model, and the third model is a model determined based on the set of reference points of the second communication device; and
reference point information of a recommended reference point.

The terminal 1000 provided in the foregoing embodiment can implement processes implemented in the method embodiment of FIG. 2 or FIG. 3, and same technical effect can be achieved. To avoid repetition, details are not described herein again.

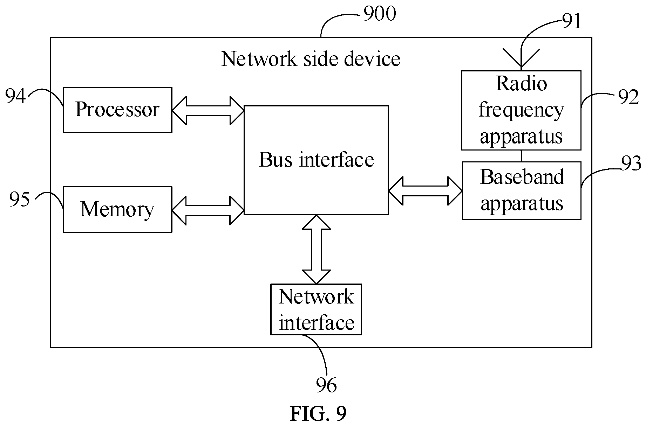

Specifically, an embodiment of this application further provides a network side device. As shown in FIG. 9, a network device 900 includes an antenna 91, a radio frequency apparatus 92, and a baseband apparatus 93. The antenna 91 is connected to the radio frequency apparatus 92. In an uplink direction, the radio frequency apparatus 92 receives information through the antenna 91, and sends the received information to the baseband apparatus 93 for processing. In a downlink direction, the baseband apparatus 93 processes information that needs to be sent, and sends processed information to the radio frequency apparatus 92. The radio frequency apparatus 92 processes the received information, and then sends processed information through the antenna 91.

A frequency band processing apparatus may be located in the baseband apparatus 93. The method performed by the network side device in the foregoing embodiment may be implemented in the baseband apparatus 93. The baseband apparatus 93 includes a processor 94 and a memory 95.

The baseband apparatus 93 may include, for example, at least one baseband board, and a plurality of chips are disposed on the baseband board. As shown in FIG. 9, one chip is, for example, the processor 94, and is connected to the memory 95, to invoke a program in the memory 95 to perform operations of the network device shown in the foregoing method embodiment.

The baseband apparatus 93 may further include a network interface 96, configured to exchange information with the radio frequency apparatus 92. For example, the interface is a common public radio interface (common public radio interface, CPRI for short).

Specifically, the network side device in this embodiment of the present invention further includes an instruction or a program that is stored in the memory 95 and that can be run on the processor 94. The processor 94 invokes the instruction or the program in the memory 95 to perform processes implemented in the method embodiment of FIG. 2 or FIG. 3, and same technical effect can be achieved. To avoid repetition, details are not described herein again.

An embodiment of this application further provides a readable storage medium. A program or an instruction is stored in the readable storage medium. When the program or the instruction is executed by a processor, processes in the method embodiment of FIG. 2 or FIG. 3 can be implemented, and same technical effect can be achieved. To avoid repetition, details are not described herein.

The processor is a processor in the terminal or the network side device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or an instruction of a network side device to implement processes in the method embodiment of FIG. 2 or FIG. 3, and same technical effect can be achieved. To avoid repetition, details are not described herein again.

It should be understood that the chip mentioned in this embodiment of this application may also be referred to as a system-level chip, a system chip, a chip system, or a system on chip.

It should be noted that, in this specification, the term "include", "include", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by a statement "includes a ..." does not preclude the presence of additional identical elements in the process, method, article, or apparatus that includes the element. In addition, it should be noted that the scope of the method and apparatus in the implementations of this application is not limited to performing functions in an illustrated or discussed sequence, and may further include performing the functions in a basically simultaneous manner or in a reverse sequence based on the functions concerned. For example, the described method may be performed in an order different from the described order, and steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network, or the like) to perform the method described in embodiments of this application.

Embodiments of this application are described above with reference to the accompanying drawings. However, this application is not limited to the foregoing specific implementations. The foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. An information obtaining method, comprising:
obtaining, by a first communication device, description information of a set of target reference points, wherein a reference point in the set of target reference points is a process node in a communication process, and the set of target reference points comprises a reference point corresponding to an input of a first model and/or a reference point corresponding to an output of a second model.

2. The method according to claim 1, wherein the description information of the set of target reference points comprises description information of the reference point in the set of target reference points, and the description information of the reference point comprises at least one of the following:
an identity symbol of the reference point;
process location information of the reference point in the communication process;
a physical meaning corresponding to the process location information of the reference point in the communication process;
a data format corresponding to the process location information of the reference point in the communication process; and
a topological relationship between associated reference points.

3. The method according to claim 1, wherein the set of target reference points is obtained by the first communication device performing reference point configuration on a pre-obtained set of first reference points, and reference point configuration comprises at least one of the following:
adding a first reference point to the set of first reference points;
deleting a second reference point from the set of first reference points; and
modifying an association relationship between reference points in the set of first reference points.

4. The method according to claim 3, wherein the first communication device adds a first reference point to the set of first reference points based on a first triggering condition.

5. The method according to claim 4, wherein the first triggering condition comprises at least one of the following:
a new process is added, wherein the new process corresponds to the first reference point; and
a new model is added, wherein the new model corresponds to the first reference point.

6. The method according to claim 4, wherein adding a first reference point to the set of first reference points comprises:
configuring an association relationship between the first reference point and a reference point in the set of first reference points; and
modifying the association relationship between the reference points in the set of first reference points.

7. The method according to claim 3, wherein the first communication device deletes a second reference point from the set of first reference points based on a second triggering condition.

8. The method according to claim 7, wherein the second triggering condition comprises at least one of the following:
the second reference point does not correspond to an input or output of any model within a preset time period; and
a function of the second reference point is replaced with a new reference point.

9. The method according to claim 7, wherein deleting a second reference point from the set of first reference points comprises:
modifying an association relationship between reference points, in the set of first reference points, that are not the second reference point.

10. The method according to claim 3, wherein the first communication device modifies the association relationship between the reference points in the set of first reference points based on a third triggering condition.

11. The method according to claim 10, wherein the third triggering condition comprises at least one of the following:
a new process is added, wherein the new process corresponds to the first reference point, or the new process corresponds to a reference point in the set of first reference points;
a new model is added, wherein the new model corresponds to the first reference point, or the new model corresponds to a reference point in the set of first reference points;
the second reference point does not correspond to an input or output of any model within a preset time period; and
a function of the second reference point is replaced with a new reference point.

12. The method according to claim 10, wherein modifying the association relationship between the reference points in the set of first reference points comprises at least one of the following:
configuring an association relationship between the first reference point and a reference point in the set of first reference points, and modifying the association relationship between the reference points in the set of first reference points; and
modifying an association relationship between reference points, in the set of first reference points, that are not the second reference point.

13. The method according to claim 3, wherein the first communication device performs reference point configuration based on trigger information, and the trigger information comprises at least one of the following:
trigger information sent by a second communication device;
trigger information obtained by the first communication device through sensing; and
trigger information carried in a control instruction.

14. The method according to claim 13, wherein the trigger information comprises at least one of the following:
first information, wherein the first information indicates to add a new process, and the new process corresponds to the first reference point, or the new process corresponds to a reference point in the set of first reference points;
second information, wherein the second information indicates to add a new model, and the new model corresponds to the first reference point, or the new model corresponds to a reference point in the set of first reference points;
third information, wherein the third information indicates that the second reference point does not correspond to an input or output of any model within a preset time period; and
fourth information, wherein the fourth information indicates that a function of the second reference point is replaced with a new reference point.

15. The method according to claim 3, wherein the method further comprises:
sending, by the first communication device to a second communication device, the description information of the set of target reference points, wherein the set of target reference points comprises a set obtained through reference point configuration on the set of first reference points, or a subset of reference points of a set obtained through reference point configuration on the set of first reference points, and the subset of reference points comprises a reference point, in the set of first reference points, that has been through a change based on reference point configuration.

16. The method according to claim 15, wherein a manner of sending the set of target reference points comprises at least one of periodic sending, sending triggered based on an event, and sending triggered based on an instruction.

17. The method according to claim 1, wherein the method further comprises:
sending, by the first communication device to a second communication device, a first request, wherein the first request comprises reference point information identifying a third reference point corresponding to an input of a model and reference point information identifying a fourth reference point corresponding to an output of the model; and
receiving, by the first communication device from the second communication device, first feedback information.

18. The method according to claim 17, wherein the first feedback information comprises at least one of the following:
first acknowledgment information indicating successful matching;
model information of a first target model, wherein an input of the first target model corresponds to the third reference point, and an output of the first target model corresponds to the fourth reference point;
a first reference point alignment request;
second acknowledgment information indicating failed matching;
reference point information identifying a reference point, in the third reference point, with mismatching, and reference point information identifying a reference point, in the fourth reference point, with mismatching; and
reference point information of a recommended reference point.

19. The method according to claim 18, wherein the method further comprises:
in a case in which the first feedback information comprises the reference point information of the recommended reference point, sending, by the first communication device, information about whether to accept the recommended reference point.

20. The method according to claim 1, wherein the method further comprises:
receiving, by the first communication device from a second communication device, a second request, wherein the second request comprises reference point information identifying a fifth reference point corresponding to an input of a model and reference point information identifying a sixth reference point corresponding to an output of the model;
performing model matching, by the first communication device based on a set of reference points of the first communication device according to the second request, to obtain second feedback information, wherein the set of reference points of the first communication device comprises the set of target reference points; and
sending, by the first communication device to the second communication device, the second feedback information.

21. The method according to claim 20, wherein the second feedback information comprises at least one of the following:
first acknowledgment information indicating successful matching;
model information of a second target model, wherein an input of the second target model corresponds to the fifth reference point, and an output of the second target model corresponds to the sixth reference point;
a second reference point alignment request;
second acknowledgment information indicating failed matching;
reference point information identifying a reference point, in the fifth reference point, that fails to match a first target reference point, and reference point information identifying a reference point, in the sixth reference point, that fails to match a second target reference point, wherein the first target reference point is a reference point corresponding to an input of a third model, the second target reference point is a reference point corresponding to an output of the third model, and the third model is a model determined based on the set of reference points of the first communication device; and
reference point information of a recommended reference point.

22. The method according to claim 1, further comprising:
receiving, by the first communication device from a second communication device, first model information, wherein the first model information comprises reference point information identifying a seventh reference point corresponding to an input of a model and reference point information identifying an eighth reference point corresponding to an output of the model;
performing model matching, by the first communication device based on the first model information and a set of reference points of the first communication device, to obtain third feedback information, wherein the set of reference points of the first communication device comprises the set of target reference points; and
sending, by the first communication device to the second communication device, the third feedback information.

23. The method according to claim 22, wherein the third feedback information comprises at least one of the following:
first acknowledgment information indicating successful matching;
a third reference point alignment request;
second acknowledgment information indicating failed matching;
reference point information identifying a reference point, in the seventh reference point, that fails to match a first target reference point, and reference point information identifying a reference point, in the eighth reference point, that fails to match a second target reference point, wherein the first target reference point is a reference point corresponding to an input of a third model, the second target reference point is a reference point corresponding to an output of the third model, and the third model is a model determined based on the set of reference points of the first communication device; and
reference point information of a recommended reference point.

24. The method according to claim 1, wherein the method further comprises:
sending, by the first communication device, second model information, wherein the second model information comprises reference point information identifying a ninth reference point corresponding to an input of a model and reference point information identifying a tenth reference point corresponding to an output of the model; and
receiving, by the first communication device, fourth feedback information.

25. The method according to claim 24, wherein the fourth feedback information comprises at least one of the following:
first acknowledgment information indicating successful matching;
a fourth reference point alignment request;
second acknowledgment information indicating failed matching;
reference point information identifying a reference point, in the ninth reference point, with mismatching, and reference point information identifying a reference point, in the tenth reference point, with mismatching; and
reference point information of a recommended reference point.

26. An information obtaining method, comprising:
receiving, by a second communication device from a first communication device, description information of a set of target reference points, wherein a reference point in the set of target reference points is a process node in a communication process, and the set of target reference points comprises a reference point corresponding to an input of a first model and/or a reference point corresponding to an output of a second model.

27. The method according to claim 26, wherein the description information of the set of target reference points comprises description information of the reference point in the set of target reference points, and the description information of the reference point comprises at least one of the following:
an identity symbol of the reference point;
process location information of the reference point in the communication process;
a physical meaning corresponding to the process location information of the reference point in the communication process;
a data format corresponding to the process location information of the reference point in the communication process; and
a topological relationship between associated reference points.

28. The method according to claim 26, wherein the method further comprises: sending, by the second communication device to the first communication device, trigger information.

29. The method according to claim 28, wherein the trigger information comprises at least one of the following:
first information, wherein the first information indicates to add a new process, and the new process corresponds to the first reference point, or the new process corresponds to a reference point in a set of reference points of the second communication device, wherein the set of reference points of the second communication device does not comprise the first reference point;
second information, wherein the second information indicates to add a new model, wherein the new model corresponds to the first reference point, or the new model corresponds to a reference point in the set of reference points of the second communication device;
third information, wherein the third information indicates that a second reference point does not correspond to an input or output of any model within a preset time period, and the set of reference points of the second communication device comprises the second reference point; and
fourth information, wherein the fourth information indicates that a function of the second reference point is replaced with a new reference point.

30. The method according to claim 26, wherein the method further comprises:
receiving, by the second communication device, a first request, wherein the first request comprises reference point information identifying a third reference point corresponding to an input of a model and reference point information identifying a fourth reference point corresponding to an output of the model;
performing model matching, by the second communication device based on a set of reference points of the second communication device according to the first request, to obtain first feedback information, wherein the set of reference points of the second communication device comprises the set of target reference points; and
sending, by the second communication device, the first feedback information.

31. The method according to claim 30, wherein the first feedback information comprises at least one of the following:
first acknowledgment information indicating successful matching;
model information of a first target model, wherein an input of the first target model corresponds to the third reference point, and an output of the first target model corresponds to the fourth reference point;
a first reference point alignment request;
second acknowledgment information indicating failed matching;
reference point information identifying a reference point, in the third reference point, that fails to match a first target reference point, and reference point information identifying a reference point, in the fourth reference point, that fails to match a second target reference point, wherein the first target reference point is a reference point corresponding to an input of a third model, the second target reference point is a reference point corresponding to an output of the third model, and the third model is a model determined based on the set of reference points of the second communication device; and
reference point information of a recommended reference point.

32. The method according to claim 31, wherein the method further comprises:
receiving, by the second communication device, information about whether the first communication device accepts the reference point information of the recommended reference point.

33. The method according to claim 26, wherein the method further comprises:
sending, by the second communication device to the first communication device, a second request, wherein the second request comprises reference point information identifying a fifth reference point corresponding to an input of a model and reference point information identifying a sixth reference point corresponding to an output of the model; and
receiving, by the second communication device, second feedback information.

34. The method according to claim 33, wherein the second feedback information comprises at least one of the following:
first acknowledgment information indicating successful matching;
model information of a second target model, wherein an input of the second target model corresponds to the fifth reference point, and an output of the second target model corresponds to the sixth reference point;
a second reference point alignment request;
second acknowledgment information indicating failed matching;
reference point information identifying a reference point, in the fifth reference point, with mismatching, and reference point information identifying a reference point, in the sixth reference point, with mismatching; and
reference point information of a recommended reference point.

35. The method according to claim 26, wherein the method further comprises:
sending, by the second communication device, first model information, wherein the first model information comprises reference point information identifying a seventh reference point corresponding to an input of a model and reference point information identifying an eighth reference point corresponding to an output of the model; and
receiving, by the second communication device, third feedback information.

36. The method according to claim 35, wherein the third feedback information comprises at least one of the following:
first acknowledgment information indicating successful matching;
a third reference point alignment request;
second acknowledgment information indicating failed matching;
reference point information identifying a reference point, in the seventh reference point, with mismatching, and reference point information identifying a reference point, in the eighth reference point, with mismatching; and
reference point information of a recommended reference point.

37. The method according to claim 26, wherein the method further comprises:
receiving, by the second communication device, second model information, wherein the second model information comprises reference point information identifying a ninth reference point corresponding to an input of a model and reference point information identifying a tenth reference point corresponding to an output of the model;
performing model matching, by the second communication device based on the second model information and a set of reference points of the second communication device, to obtain fourth feedback information, wherein the set of reference points of the second communication device comprises the set of target reference points; and
sending, by the second communication device, the fourth feedback information.

38. The method according to claim 37, wherein the fourth feedback information comprises at least one of the following:
first acknowledgment information indicating successful matching;
a fourth reference point alignment request;
second acknowledgment information indicating failed matching;
reference point information identifying a reference point, in the ninth reference point, that fails to match a first target reference point, and reference point information identifying a reference point, in the tenth reference point, that fails to match a second target reference point, wherein the first target reference point is a reference point corresponding to an input of a third model, the second target reference point is a reference point corresponding to an output of the third model, and the third model is a model determined based on the set of reference points of the second communication device; and
reference point information of a recommended reference point.

39. An information obtaining apparatus, comprising:
an obtaining module, configured to obtain description information of a set of target reference points, wherein a reference point in the set of target reference points is a process node in a communication process, and the set of target reference points comprises a reference point corresponding to an input of a first model and/or a reference point corresponding to an output of a second model.

40. The apparatus according to claim 39, wherein the description information of the set of target reference points comprises description information of the reference point in the set of target reference points, and the description information of the reference point comprises at least one of the following:
an identity symbol of the reference point;
process location information of the reference point in the communication process;
a physical meaning corresponding to the process location information of the reference point in the communication process;
a data format corresponding to the process location information of the reference point in the communication process; and
a topological relationship between associated reference points.

41. An information obtaining apparatus, comprising:
a receiving module, configured to receive description information of a set of target reference points from a first communication device, wherein a reference point in the set of target reference points is a process node in a communication process, and the set of target reference points comprises a reference point corresponding to an input of a first model and/or a reference point corresponding to an output of a second model.

42. The apparatus according to claim 41, wherein the description information of the set of target reference points comprises description information of the reference point in the set of target reference points, and the description information of the reference point comprises at least one of the following:
an identity symbol of the reference point;
process location information of the reference point in the communication process;
a physical meaning corresponding to the process location information of the reference point in the communication process;
a data format corresponding to the process location information of the reference point in the communication process; and
a topological relationship between associated reference points.

43. A communication device, comprising a processor, a memory, and a program or an instruction that is stored in the memory and capable of being run on the processor, wherein the program or the instruction is executed by the processor to implement steps of the information obtaining method according to any one of claims 1 to 38.

44. A readable storage medium, wherein the readable storage medium stores a program or an instruction, and the program or the instruction is executed by the processor to implement steps of the information obtaining method according to any one of claims 1 to 38.
